# EUROPÄISCHE PATENTSCHRIFT

(11) **EP 3 353 047 B1**
(45) Veröffentlichungstag und Bekanntmachung des Hinweises auf die Patenterteilung: **28.10.2020**
(21) Anmeldenummer: 17722876.4
(22) Anmeldetag: 10.04.2017
(51) Int. Cl.: B63B 35/70

(54) **ÜBUNGSGERÄT UND ÜBUNGSSITZ ZUM KITESURFEN UND VERFAHREN DAZU**
EXERCISE APPARATUS AND EXERCISE SEAT FOR KITESURFING AND METHOD FOR SAME
APPAREIL D'ENTRAÎNEMENT ET SIÈGE D'ENTRAÎNEMENT POUR LE KITESURF ET PROCÉDÉ ASSOCIÉ

(30) Priorität: 13.05.2016 DE 102016108990; 17.03.2017 WO PCT/IB2017/051561
(43) Veröffentlichungstag der Anmeldung: 01.08.2018
(73) Patentinhaber: Lange Erfolg GmbH&Co. KG, 79249 Merzhausen (DE)
(72) Erfinder: LANGE, André, 79249 Merzhausen (DE)
(74) Vertreter: Tahhan, Nader Isam Mark
(86) Internationale Anmeldenummer: PCT/IB2017/052066
(87) Internationale Veröffentlichungsnummer: WO 2017/195050

(56) Entgegenhaltungen:
- DE-U1- 9 112 676
- DE-U1-202007 009 553
- FR-A1- 2 496 472
- US-A- 4 544 153

## Beschreibung

### Einleitung

Die Erfindung betrifft ein Übungsgerät zum Erlernen der Handhabung von Personen ziehenden Fluggeräten. Insbesondere betrifft die Erfindung ein Übungsgerät für Kitesurfer, sowie ein Verfahren zu dessen Betrieb.

### Stand der Technik und Nachteile

Personen zu Wasser oder zu Land ziehende Sportgeräte finden zunehmende Verbreitung. Bei diesen Sportarten, zu denen unter Anderem auch das so genannte Kitesurfen zählt, ist eine Person mittels eines Seiles oder dergleichen mit einem Fluggerät verbunden. Das Fluggerät übt während des Fluges eine Zugkraft auf die Person aus, die ihrerseits typischerweise auf einem Hilfsmittel wie einem Schwimmkörper oder einem mit Rädern oder Kufen versehenen Fahrzeug steht oder sitzt. Bei entsprechend starken Fluggeräten ist es sogar möglich, zu Wasser auf das Hilfsmittel zu verzichten und mit den bloßen Füßen auf der Wasseroberfläche entlang zu gleiten.

Als Fluggeräte kommen typischerweise windgetriebene Einrichtungen wie Lenkdrachen (engl. "kites") zum Einsatz. Derartige Einrichtungen können demnach nur bei geeigneten Windverhältnissen verwendet werden, da sie bei zu wenig oder keinem Wind zu geringe Kräfte bereitstellen, und bei zu viel Wind nicht mehr handhabbar sind. In der Druckschrift DE 29 33 050 A1 aus dem Jahre 1979 ist ein entsprechendes Fluggerät beschrieben.

Bekannt sind außerdem Zugdrohnen als Einrichtungen, die eine von den Windverhältnissen weitgehend unabhängige Verwendung erlauben. Nachteilig an solchen motorgetriebenen Einrichtungen ist der Energieverbrauch, die oft begrenzte Betriebszeit, und auch die Geräuschentwicklung kann unerwünscht sein.

Insbesondere die windgetriebenen Einrichtungen erfordern eine erhebliche Übung bei der Handhabung, da der Benutzer während des Betriebes sicherstellen muss, dass das Fluggerät sowohl überhaupt in der Luft bleibt, was bei oft wechselnden Windverhältnissen schwierig ist und Erfahrung erfordert, und außerdem für die Steuerung des Fluggerätes zuständig ist, damit dieses ihn auch in eine gewünschte Richtung zieht.

Die Steuerung erfolgt zumeist unter Zuhilfenahme von zwei oder mehr Zugseilen, welche das Fluggerät in Abhängigkeit des von den Händen des Benutzers auf die Seile ausgeübten Kräfte zur Seite kippen lassen, in welche es dann zu fliegen sucht. Häufig sind die Seile an den Enden einer Querstange, "Bar" genannt, angebracht. Diese wird vor dem Körper des Benutzers gehalten. Sie ist mittels einer lösbaren Verbindung mit dem so genannten Trapez verbunden, einem Gurtzeug, welches im Hüftbereich des Benutzers angebracht wird. Das Trapez verteilt die hohen Zugkräfte des Lenkdrachens auf den Körper und wirkt so frühzeitiger Ermüdung der die Bar haltenden Arme entgegen.

Das komplexe Zusammenspiel der unterschiedlichen Komponenten erfordert ein großes Maß an Erfahrung bei der Benutzung, die im wesentlichen nur durch praktische Übungen zu erlangen ist. Hierfür ist es zunächst nötig, eine geeignete Übungsstelle auszusuchen. Im Falle des Kitesurfens bedeutet dies, dass der Schüler im Wasser stehen können muss, und dass die Windverhältnisse passend und stabil sind, was gerade in Strandnähe nicht immer gegeben ist. Der Kiteschüler übt dabei angehängt an den Drachen, stehend, alleine oder von einer Person am Trapez gehalten. Durch das vielfache Wiederholen der nötigerweise schnell aufeinander folgenden Schritte "Aufsteigen auf das Board", "Versuch, den Lenkdrachen in die Luft zu bringen und dort zu halten", "Board in Bewegung zu setzen und darauf stehen bleiben", und schließlich "Lenkdrachen in eine gewünschte Richtung steuern" treten oft frühzeitig Ermüdungserscheinungen beim Schüler auf. Diese werden durch die hohe Reizwirkung von Wasser, Wind und Sonne weiter verstärkt. Häufige Pausen sind daher unverzichtbar, was die eigentliche Übungszeit entsprechend verkürzt. Das praktisch simultane Durchführen der oben genannten Schritte ist schwierig und kann zu Frustration führen. Wird der Kite versehentlich falsch gelenkt, eine Böe erfasst den Kite plötzlich oder es kommt zu einem technischen Problem am Kite, können sehr große Kräfte entstehen, die den mit dem Kite fest verbundenen Schüler mitreißen können. Hierdurch kommt es immer wieder zu Gefährdungen der Schüler, der sichernden Person, aber auch von Passanten oder anderen Sportlern. Gerade der zum Üben geeignete Bereich wird gerne auch von bereits erfahrenen Sportlern frequentiert, und zwar insbesondere gerade dann, wenn die Wind- und Wetterverhältnisse auch für den Schüler geeignet sind. Die Gefahr von Unfällen durch Zusammenstöße ist daher durchaus gegeben. Da der Kiteschüler beim Üben immer wieder hinter dem Kite her gezogen wird, kommt es zu einer ständigen Verschiebung der Gefahrenpunkte, so dass eine weiter erhöhte Aufmerksamkeit auch der umgebenden Personen unerlässlich, jedoch nicht immer gegeben ist. Schließlich benötigt der Kiteschüler sehr viel Kraft und Zeit, um mit dem ziehenden Kite zurück gegen den Wind zu gehen. Dies verlangsamt ebenfalls das Lerntempo und erhöht die Risiken.

Aus dem Stand der Technik sind daher Übungseinrichtungen bekannt, die das Erlernen der zum Handhaben von windgetriebenen Sportgeräten nötigen Techniken vereinfachen sollen. Die Druckschrift DE 10 2010 053 320 A1 schlägt hierzu eine Vorrichtung vor, welche vollständig im Trockenen, beispielsweise in einer Wohnung, aufgebaut und betrieben wird. Die Vorrichtung dient insbesondere dem Üben von Sprüngen mit einem Kiteboard, die besonders viel Erfahrung und Technik erfordern. Zum Üben der Grundfertigkeiten ist diese Vorrichtung hingegen nicht geeignet.

Eine zum Erlernen von Grundfertigkeiten des Windsurfens geeignete Anlage ist aus der Druckschrift DE 26 581 10 A1 bekannt. Zwischen zwei fest verankerten Endpunkten sind Führungen gespannt, an welchen sich die mittels Ösen oder dergleichen eingehängten Surfbretter entlangbewegen können. Zum Erlernen des Kitesurfens ist eine derartige Anlage jedoch wenig geeignet, da gerade die wesentlichen Fertigkeiten des Aufsteigens auf das Board einerseits und das Steuern des Kites andererseits in dieser Form beim Windsurfen nicht durchzuführen sind. Nur ein bereits recht geübter Kiteschüler wird mit der beschriebenen Anlage zurechtkommen, wobei er derselben dann nicht mehr bedürfte.

Ebenfalls aus dem Windsurfing-Bereich bekannt sind verschiedene Arten von am Strand aufstellbaren Untergestellen, von denen beispielhaft auf die Druckschrift DE 3412721 A1 hingewiesen werden soll. Wenngleich ein Kiteschüler grundsätzlich mit einer derartigen Anlage bestimmte Übungen hinsichtlich des Steuerns des Kites durchführen kann, ist die Gefahr groß, dass er durch eine Böe aufgrund kurzfristig sehr starker Kräfte von der Anlage gerissen werden kann. Zudem ist eine solche an Land einsetzbare stationäre Anlage wenig geeignet, um ein Gefühl für den Zusammenhang zwischen der Wind- und der Fortbewegungsrichtung zu entwickeln.

Eine Anlage, die ein realistisches Gefühl für die Bewegung auf dem Wasser vermittelt, ist in der Druckschrift WO 2010/015788 A4 gezeigt. Eine an Land aufzubauende Strömungsanlage erzeugt eine fortlaufende Wasserströmung, auf welcher der Schüler gleiten kann. Dieser hält sich an einem stationär befestigten Seil oder dergleichen fest. Zum Erlernen des Kitesurfens ist die Anlage schon wegen des mangelnden Windes nicht verwendbar. Zwar sind auch selber Wind erzeugende Anlagen bekannt, beispielsweise aus der Druckschrift DE 39 00 837 A1, diese haben sich jedoch nicht durchgesetzt.

Aus US4544154, FR2496472 oder DE 9112676U sind ebenfalls Trainingsgeräte für Wassersportarten bekannt.

### Aufgabe der Erfindung und Lösung

Die Aufgabe der Erfindung besteht in der Vermeidung oder Verringerung der weiter oben beschriebenen Nachteile. Demnach soll die Erfindung die mit dem Üben des Kitesurfens verbundenen Gefahren reduzieren. Sie soll den Lerneffekt beim Schüler verbessern, Verletzungen vermeiden helfen und Ermüdung sowie Frustration verringern.

Die Aufgabe wird durch ein Übungsgerät nach Anspruch 1, sowie ein Verfahren zum Betrieb eines Übungsgerätes nach nebengeordnetem Anspruch 10 gelöst. Vorteilhafte Ausführungsformen sind den jeweils abhängigen Unteransprüchen, der nachfolgenden Beschreibung sowie den Figuren zu entnehmen.

### Beschreibung

Das erfindungsgemäße Übungsgerät zur Anbringung an einer Verankerung dient dem Erlernen der Handhabung von Personen ziehenden Fluggeräten wie beispielsweise Lenkdrachen / Kites oder Flugdrohnen. Es umfasst eine Plattform zur stehenden, sitzenden, knienden oder liegenden Aufnahme mindestens einer Person, mindestens einen Verankerungspunkt zur Befestigung eines die Person am Übungsgerät sichernden Sicherungsmittels, und eine vertikale Drehachse, um welche das Übungsgerät drehbar lagerbar oder drehbar gelagert ist.

Die Plattform dient demnach der Aufnahme mindestens eines, und bevorzugt mehrerer Schüler sowie besonders bevorzugt auch des Lehrers. Der Begriff "Plattform" ist weit gefasst und bezeichnet nicht nur Vorrichtungen mit durchgehenden Flächen, sondern auch Gestelle und dergleichen; er ist demnach funktional zu verstehen.

Der Verankerungspunkt dient dem Sichern des bzw. der Schüler, und insbesondere aller Personen, welche tatsächlich mit dem Üben des Kitesurfens beschäftigt sind. Erfindungsgemäß ist der Verankerungspunkt in oder oberhalb der Höhe des Gesäßbereiches der Person angeordnet, beispielsweise in einer Höhe von wenigstens 25, 40, 50, 75 und/oder 100 Zentimetern. Vorzugsweise erfolgt die Sicherung aus Sicht der jeweiligen Person rückseitig, also im Bereich ihres Rückens/Gesäßes etc. Es ist jedoch auch möglich, dass die Sicherung alternativ oder zusätzlich auch vorderseitig oder uni- oder bilateral erfolgt. Die Sicherung kann durch Zug aufnehmende Sicherungsmittel (Seile, Gurte) erfolgen, oder durch Druck aufnehmende Sicherungsmittel (Auflagen, Geländer, Gitter). Die Aufgabe des Verankerungspunktes und der Sicherung liegt in der Aufnahme und Weiterleitung der vom Kite auf den Schüler wirkenden Kräfte. Aufgrund der Sicherung wird der Schüler auch beim Auftreten unerwartet hoher Windkräfte nicht durch den Kite vom Übungsgerät gerissen. Somit sinken Ermüdung und Verletzungsrisiko signifikant. Der Schüler kann sich vollständig auf das Steuern des Kites konzentrieren, ohne dabei durch die Möglichkeit des Auftretens einer unerwarteten Gefahr beeinträchtigt zu werden.

Es sei hinzugefügt, dass die Sicherung besonders bevorzugt manuell und/oder automatisiert lösbar ist. Dies bedeutet, dass durch den Schüler, den Lehrer oder einen automatischen Mechanismus (z.B. bei dringender Notwendigkeit des Verlassens des Übungsgerätes) die Sicherung auch entsprechend leicht entriegelbar sein sollte.

Die vertikale Drehachse, um welche das Übungsgerät drehbar lagerbar oder drehbar gelagert ist, ermöglicht es dem Übungsgerät, sich aufgrund der vom Kite auf den Schüler und durch das Sicherungsmittel und den Verankerungspunkt auf den Körper des Übungsgerätes übertragenen externen (Wind-)Kräfte um diese Drehachse zu drehen. Somit kann der Kiteschüler mittels des von ihm gesteuerten Kites das Übungsgerät in den oder aus dem Wind drehen und bekommt so ein höchst realistisches Gefühl für die Zusammenhänge des Kitesteuerns einerseits und den damit ausführbaren Bewegungen seines "Boards", welches beim Üben durch die Plattform selber bereitgestellt wird. Aufgrund der typischerweise großen Trägheit, die die Plattform im Vergleich zu einem Kiteboard aufweist, erfolgen die Bewegungen jedoch deutlich langsamer, so dass sich der Schüler Schritt für Schritt an die Zusammenhänge gewöhnen kann, ohne durch die ansonsten sehr exakt auszuführenden Bewegungen und die schnellen Reaktionen des Boards überfordert zu werden.

Erfindungsgemäß ist die Drehachse relativ zur Plattform mittels eines an der Unterseite, am Umfang, oder der Oberseite der Plattform angeordneten Drehgelenks vollständig, oder durch ein gleitend zwischen zwei Endanschlägen (15) verschiebbares Koppelelement innerhalb konstruktiv vorgegebener Grenzen, ortsfest. Das bedeutet, dass es einen vorherbestimmten Punkt oder Bereich an der Plattform gibt, der mit ihr verbunden ist nur mit ihr wandert, durch welchen die Drehachse jederzeit verläuft. Dieser Punkt oder Bereich kann am Rand der Plattform liegen; bevorzugt ist jedoch im Zentrum der Plattform angeordnet.

Erfindungsgemäß ist das Drehgelenk seinerseits unmittelbar oder indirekt mit einer Verankerung verbunden, so dass das Übungsgerät ferner auch um diese Verankerung drehbar ist.

Schließlich ist das Übungsgerät schwimmfähig, oder es weist Kufen oder eine gleitfähige Unterseite, oder Rollen auf.

Die Erfindung reduziert somit wirkungsvoll die mit dem Üben des Kitesurfens verbundenen Gefahren. Sie verbessert den Lerneffekt beim Schüler, hilft Verletzungen zu vermeiden, und verringert Ermüdung sowie Frustration.

Nach einer vorgenannten Ausführungsform ist die relativ zur Plattform vollständig ortsfeste Drehachse mittels eines an der Unterseite, am Umfang, oder der Oberseite der Plattform angeordneten Drehgelenks bereitgestellt. Der Begriff des Drehgelenks ist hier funktional zu verstehen; demnach fallen alle bekannten Arten von eine Drehung um eine Drehachse erlaubenden Lagerungen unter den Begriff. Das Drehgelenk kann beispielsweise durch eine Öse, durch welche ein Seil oder eine Kette gehängt wird, bereitgestellt sein, oder durch eine drehbar gelagerte Stange, um welche sich die Plattform drehen kann. Die Plattform kann aufgehängt sein, vorzugsweise weist sie jedoch an ihrer Unterseite das Drehgelenk auf. Selbst, wenn die Plattform mit ihren Außenkanten mit den Wänden eines runden Käfigs zusammenwirkt, an dem sie entlanggleiten kann, ist auf diese Weise ein (funktionales) Drehgelenk bereitgestellt.

Nach einer anderen vorgenannten Ausführungsform ist die innerhalb konstruktiv vorgegebener Grenzen ortsfeste Drehachse durch ein gleitend zwischen zwei Endanschlägen verschiebbares Koppelelement bereitgestellt. Die Drehachse ist demnach in einem Bereich, nicht nur einem Punkt, ortsfest. Dieser Bereich ist jedoch konstruktiv exakt bestimmbar und befindet sich weiterhin in unmittelbarer Nähe zur und Verbindung mit der Plattform.

Ein Beispiel für eine solche Ausführungsform ist eine Rolle als Drehachse bereitstellendes Koppelelement, wobei die Rolle auf einem Seil gleiten kann, welches an zwei als Endanschlägen dienenden Punkten an der Außen- oder Unterseite der Plattform befestigt ist. Die Rolle selber kann z.B. mit einem Seil am Meeresgrund verankert sein.

Durch das (begrenzte) Verschieben des Koppelelements kann eine erste Reaktion der Plattform sofort, und zunächst ohne die langsamere Drehung erfolgen. Zudem erlaubt auch bei straff gespanntem (und somit eine Drehung um den Ankerpunkt am Boden weitgehend verhinderndem) Ankerseil eine solche Konstruktion ein relativ schnelles Ansprechen (Drehen) der Plattform auf seitlich wirkende Zugkräfte, und zwar auch dann, wenn die Plattform groß bzw. schwer und somit für eine dem Lernen zuträgliche Reaktionsgeschwindigkeit zu träge ist.

Nach einer weiteren vorgenannten Ausführungsform weist Kufen oder eine gleitfähige Unterseite zur Fortbewegung auf Eis und Schnee auf. Besonders bevorzugt hat das Übungsgerät dann keine ortsfeste Drehachse; es ist jedoch denkbar, dass diese wahlweise zuschaltbar ist, beispielsweise durch Ablassen eines entsprechend drehbar mit der Plattform verbundenen Gewichtes. Mit einer solchen Plattform kann insbesondere das beliebte so genannte "Snowkiten" geübt werden.

Nach einer weiteren Ausführungsform weist das Übungsgerät Rollen zur Fortbewegung auf festem Untergrund auf. Die Rollen können ihrerseits drehbar gelagert sein, beispielsweise nach Art eines Einkaufswagens, so dass die Plattform in der Horizontalen um eine vertikale Drehachse drehbar ist. Auch hier kann die Ortsfestigkeit der Drehachse optional zuschaltbar sein. Ein solches Übungsgerät kann bei ortsfester Drehachse auch auf kleinen Plätzen betrieben werden, bei ortsvariabler Drehachse auf breiten Straßen, ausgedienten Flugfeldern, ebenen Rasenflächen oder ausgetrockneten Salzseen.

Vorzugsweise jedoch ist das Übungsgerät schwimmfähig. Es ist klar, dass das Übungsgerät in allen beschriebenen, aber ganz besonders in dem schwimmbaren Fall kipp- bzw. kentersicher sein sollte. Dies kann durch eine entsprechende Größe oder entsprechend weit reichende / schwere Ausleger erreicht werden, die vorzugsweise in die dem Kite entgegen gesetzte Richtung weisen. Sucht demnach ein Kite, die Plattform in eine bestimmte Richtung zu ziehen, ist der Ausleger gerade an der entgegen gesetzten Seite der Plattform angeordnet. Der Ausleger bzw. das Gewicht kann ein festes oder ein flüssiges Material wie besonders bevorzugt Wasser enthalten.

Vorzugsweise umfasst das dann schwimmfähige Übungsgerät einen (ein- oder auch mehrteiligen) Schwimmkörper, welcher dauerhaft oder vorübergehend einen Auftrieb bereitstellt. Das bedeutet, dass das Übungsgerät ohne weitere Hilfsmittel wie z.B. einen Kran oder einen es stützenden Untergrund selbsttätig auf dem Wasser schwimmen kann.

Nach einer bevorzugten Ausführungsform weist das Übungsgerät eine in etwa kreisförmige Grundfläche auf. Es ist klar, dass auch regelmäßige Vielecke unter diese auch als "Grundform" bezeichenbare Grundfläche fallen. Es ist außerdem klar, dass das Übungsgerät Ausbuchtungen und/oder Einschnitte an seiner Seite aufweisen kann, ohne die besagte Grundform zu verlieren. Die Kreisform hat den Vorteil, dass auf ihr eine größere Anzahl von Schülern Platz finden, die beispielsweise alle zur Außenseite der Plattform schauen, wohingegen ihre Rücken einander zugewandt sind. Jeder Schüler hat demnach auf einfache Weise einen identischen Platz zur Verfügung, mit gleichem Abstand zum Rand der Plattform. Somit findet jeder Schüler unabhängig vom gewählten Platz identische Übungsbedingungen vor.

Nach anderen Ausführungsformen weist die Plattform eine rechteckige wie insbesondere quadratische, oder eine halbkreisförmige Grundfläche auf.

Vorzugsweise weist das Übungsgerät einen Abstützkörper für die Füße, und/oder einen Abstützkörper für den Rücken einer Person auf.

Der Abstützkörper für die Füße dient insbesondere der Aufnahme von Druckkräften, so dass sich der Schüler, der einen Kite hält und steuert, mit seinen Füßen gegen den Abstützkörper für die Füße stemmen kann. Eine solche Bewegung ist vergleichbar mit dem späteren Abstemmen der angewinkelten Füße vom Board.

Der Abstützkörper für den Rücken dient ebenfalls insbesondere der Aufnahme von Druckkräften, um ein bequemes Anliegen z.B. während der Ruhepausen zu erlauben. Außerdem und vorzugsweise dient der Abstützkörper für den Rücken aber auch der Bereitstellung des bzw. der Verankerungspunkte, an dem bzw. denen das bzw. die Sicherungsmittel für den bzw. die Schüler angebracht werden. Demnach sollte der Abstützkörper für den Rücken auch zur Aufnahme von Zugkräften geeignet sein.

Nach einer Ausführungsform ist der oder sind die ein- oder mehrteiligen Abstützkörper am Rand der Plattform oder im Mittelbereich der Plattform angeordnet. Besonders bevorzugt ist der Abstützkörper für die Füße am (umlaufenden) Randbereich der Plattform angeordnet, und der Abstützkörper für den Rücken in seinem Zentralbereich, sofern die Plattform eine kreisförmige oder rechteckige Grundfläche hat. Im Falle einer halbkreisförmigen Grundfläche befindet sich der Abstützkörper für die Füße an der bogenförmigen Außenkante, und der Abstützkörper für den Rücken im Zentrum des Halbkreises oder entlang der geraden Außenkante.

Nach einer Ausführungsform weist der Abstützkörper für die Füße einen Bereich auf, welcher mittels der Füße einer Person seitlich und/oder vor- und rückwärts kippbar und/oder um eine Mittelachse drehbar ist. Derartige Kippbewegungen werden auch beim Fahren mit einem Board ausgeführt, um die Geschwindigkeit zu kontrollieren oder eine bestimmte Richtung einzuschlagen. Durch das Bereitstellen eines derartigen Bereiches kann der Schüler demnach realitätsnahe Bewegungen mit seinen Füßen vollführen, während er den Kite steuert. Es ist möglich, die Bewegungen zur Steuerung der Plattform zu nutzen, um ein positives Feedback zu erzeugen.

Konkret kann der besagte Abstützkörper entweder mit den Füßen verformbar ausgebildet, oder fest ausgebildet und den besagten Freiheitsgraden entsprechend bewegbar auf der Plattform gelagert sein.

Verformbar mit den Füßen ist beispielsweise ein aufblasbarer oder anderweitig elastischer Untergrund, auf dem sich die Füße abstützen können. Insbesondere kommt hier der oben beschriebene umlaufende Abstützkörper für die Füße in Betracht.

Ein fest ausgebildeter Bereich kann beispielsweise durch eine platten- oder gestellartige Konstruktion realisiert werden, die entsprechend den gewünschten Freiheitsgraden auf der Plattform gelagert ist. Die konkrete Ausführung einer entsprechenden Konstruktionen stellt den Fachmann vor keine Schwierigkeiten wohlbekannt und bedarf daher keiner näheren Erläuterung.

Nach einer weiteren Ausführungsform weist die Plattform eine Aussparung am Umfang auf. Die Aussparung kann eine zur Seite des Übungsgerätes weisende Öffnung in einem ansonsten umlaufenden Geländer oder Abstützbereich sein, so dass durch die Öffnung auf einfache Weise Personen oder Gegenstände auf die Plattform gelangen können. Sie kann auch eine in der Plattform vorhandene (Boden-)Öffnung sein, durch welche ggf. Wasser in den Bereich der Grundfläche des Übungsgerätes gelangen kann. Im Falle einer kreisförmigen Grundfläche kann die Form einer solchen Aussparung segmentförmig sein und z.B. ein Fünftel oder ein Sechstel des Umkreises umfassen.

Nach einer Ausführungsform ist die Aussparung zur Aufnahme eines als fest ausgebildeter Abstützkörper für die Füße dienenden brettartigen Sportgeräts vorgesehen, wobei das Sportgerät den besagten Freiheitsgraden entsprechend in der Aussparung lagerbar ist. Anders ausgedrückt, die Aussparung kann ein Kiteboard oder ein für Übungszwecke vergleichbares Gerät aufnehmen, welches mit der Plattform verbunden, aber kipp- und/oder drehbar gelagert ist, damit der Schüler auf dem Gerät entsprechende Bewegungen vollführen kann, und zwar insbesondere dann, wenn er gleichzeitig den Kite steuert. Optional kann auch eine Skala zur Anzeige der Neigung und/oder Drehung des brettartigen Sportgeräts vorgesehen sein. Die Steifigkeit der Gelenke, d.h. die Kraft, mit der sich das brettartige Sportgerät in eine "Ruheposition" zu bewegen sucht, ist vorzugsweise einstellbar.

Nach einer anderen Ausführungsform weist die Aussparung einen verformbaren Boden auf und stellt zur Befestigung an den Füßen einer Person dienende Haltemittel bereit. Der Untergrund der Plattform kann demnach beispielsweise Schlaufen, die bevorzugt in Position und Größe verstellbar sind, oder Mulden aufweisen, welche die Füße eines Schülers aufnehmen können, so dass dieser immer die gleiche Position auf dem besagten Bereich einnimmt.

Nach einer weiteren Ausführungsform ist die Aussparung zur Aufnahme eines eine Person aufnehmenden, separaten Übungssitzes geeignet. Ein solcher Übungssitz wird an späterer Stelle genauer beschrieben.

Für den Fall eines schwimmbaren Übungsgerätes ist es ferner möglich, dass dasselbe unterhalb oder seitlich der Plattform mindestens einen mit ihr verbundenen, mit Wasser oder einem Feststoff füllbaren oder gefüllten Bremskörper aufweist. Dem Bremskörper kommt die wichtige Aufgabe zu, die Kentersicherheit zu verbessern und die Trägheit des Übungsgerätes zu vergrößern, damit es nicht zu leicht bzw. zu schnell von einem Schüler vorwärtsbewegt werden kann. Zudem bleibt es auch bei stärkerem Wellengang ruhiger im Wasser liegen.

Nach einer Ausführungsform ist der Bremskörper in Form eines zusätzlichen Unterbodens oder zweier Kufen bereitgestellt, und weist mindestens eine Öffnung auf, durch welche er befüllbar und/oder entleerbar ist. Nach der zuerst beschriebenen Ausführungsform weist die Plattform demnach an ihrer Unterseite eine Art zweiten Boden auf, welcher zwecks größtmöglicher Effektivität ebenfalls möglichst groß ist. Dieser zweite Boden ist derartig mit der Unterseite der Plattform verbunden, dass ein weitgehend geschlossenes oder verschließbares, mit Wasser auffüllbares sackartiges Gebilde bereitgestellt ist. Durch Auffüllen dieses Gebildes vergrößert sich die Masse des Übungsgerätes deutlich, was die entsprechenden positiven Auswirkungen mit sich bringt. Ist das Gebilde nach dem Befüllen verschlossen, ändert sich sein Füllinhalt auch nicht bei Bewegungen des Übungsgerätes. Insbesondere für den Fall einer Verlagerung des Übungsgerätes ist es jedoch wünschenswert, eine möglichst geringe Masse bewegen zu müssen. Dann kann das Gebilde aktiv oder passiv (siehe weiter unten) entleert werden.

Nach einer bevorzugten Ausführungsform umfasst das Übungsgerät auch eine Schleppeinrichtung. Unter Zuhilfenahme derselben kann das Übungsgerät auf einfache Weise von einem Ort zum anderen geschleppt werden. Insbesondere ein Seil, eine Kette oder eine Stange kommen hierfür in Betracht, das bzw. die (funktional-)gelenkig mit der Plattform verbunden ist.

Für den Fall, dass das Übungsgerät den vorstehend beschriebenen Bremskörper aufweist, greift die besagte Schleppeinrichtung, in einer zur Drehachse parallelen Ansicht gesehen, am gegenüber der dann ebenfalls vorgesehenen mindestens einen Öffnung des Bremskörpers liegenden Bereich des Übungsgerätes an. Das bedeutet, dass die mindestens eine Öffnung gerade in diejenige Richtung weist, die der Schlepprichtung entgegen gesetzt ist. Die Schlepprichtung wiederum ist diejenige Richtung, in welche das Übungsgerät mittels der Schleppeinrichtung bevorzugt fortbewegt werden kann.

Der Vorteil einer derartigen Anordnung liegt darin begründet, dass sich ein zunächst gefüllter Bremskörper praktisch selbsttätig entleert, wenn das Übungsgerät in die besagte Vorzugsrichtung geschleppt wird. Dies rührt daher, dass sich beim Schleppen der Bug des Übungsgerätes leicht anhebt, so dass im Bremskörper enthaltenes Wasser durch die kontinuierlich unter dem Bug eindringende, zum Heck wandernde Strömungsfront herausgefördert wird. Sobald das Übungsgerät stillsteht, kommt dieser Effekt zum Erliegen; unterstützt durch das Anfügen von Gewichten an der Unterseite des Bremskörpers bläht sich dieser ebenfalls selbsttätig nach und nach wieder auf.

Nach einer anderen Ausführungsform umfasst das Übungsgerät eine aktiv wirkende Pumpvorrichtung zum Befüllen und/oder Entleeren des Bremskörpers.

Nach einer weiteren Ausführungsform ist der Bremskörper verschließbar ausgestaltet. Auf diese Weise kann Wasser, welches bereits im Volumen aufgenommen wurde, dort festgehalten werden, auch wenn sich das Übungsgerät bewegt, was zu einem Entleeren des Bremskörpers führen könnte. Ebenso kann ein unerwünschtes Befüllen des noch leeren Bremskörpers verhindert werden, z.B. beim Schleppen des Übungsgerätes in eine Richtung, in welche auch die Öffnung weist.

Nach einer weiteren Ausführungsform des entsprechende Abstützkörper umfassenden Übungsgerätes sind zwischen dem Abstützkörper für die Füße und dem Abstützkörper für den Rücken Sitze gespannt. In diesen kann sich ein Schüler auf bequeme Art ausruhen, während ein anderer Schüler am Kite übt. Gespannte Sitze haben den Vorteil geringen Gewichtes und eines geringen Verletzungsrisikos, und sind auf leichte Art und Weise montier- und wieder demontierbar. Zudem können sie nötigenfalls als Regen- und Windschutz dienen, falls die Besatzung von einem Unwetter überrascht wird.

Nach einer weiteren Ausführungsform umfasst das Übungsgerät einen motorischen Antrieb und/oder eine Aufnahme für ein zum schiebenden und/oder ziehenden Vortrieb des Übungsgerätes geeignetes Fahrzeug. Mittels eines eigenen Motors kann das Übungsgerät besonders einfach zumindest kürzere Distanzen z.B. vom Ufer/Strand auf das offene Wasser/Meer fahren. Für längere Distanzen oder größere Geschwindigkeiten ist es vorzuziehen, wenn ein zusätzliches Motorboot oder dergleichen als Antrieb dient. Neben der bereits beschriebenen Funktion des Schleppens ist es auch möglich, das Übungsgerät unmittelbar zu ziehen oder zu schieben. Dies kann auch mit einem so genannten "Jetski" erfolgen. Es ist daher denkbar, dass das Übungsgerät eine entsprechende Aufnahme (Einbuchtung) aufweist, in welche ein derartiges Zug- oder Schubgerät einfahrbar ist, so dass Übungsgerät und Zug- bzw. Schubgerät vorübergehend eine Einheit bilden. Zudem erhöht das Zug- bzw. Schubgerät auch die Kentersicherheit des Übungsgerätes weiter.

Analoge Überlegungen gelten für ein Übungsgerät zum Betrieb auf festem Untergrund wie Asphalt oder Eis.

Nach einer anderen Ausführungsform umfasst das Übungsgerät eine optische Signaleinrichtung. Diese dient der Übertragung von optischen Signalen beispielsweise zwischen einem das Übungsgerät ziehenden Motorboot und der Besatzung des Übungsgerätes. Derartige Signaleinrichtungen sind als solche bekannt und bedürfen daher keiner weiteren Erläuterung.

Es ist ferner bevorzugt, dass das Übungsgerät einen zentral angeordneten Punkt zur Ankopplung für eine Sicherungsleine für das Fluggerät aufweist. Somit muss die Sicherungsleine nicht von Schüler zu Schüler weitergegeben werden, wenn reihum gewechselt wird, sondern die Leine verbleibt während der gesamten Übungszeit am zentralen Ankopplungspunkt. Dieser kann besonders bevorzugt im Zentrum des Übungsgerätes an erhöhter Position, beispielsweise auf der Oberseite des Abstützkörpers für den Rücken, angebracht sein.

Das Übungsgerät kann ferner mit Kameras zur Videoaufnahme ausgestattet sein, um den Schülern ein Videofeedback geben zu können.

Es kann Gegensprechanlagen, eine Musikanlage, einen Generator und/oder ein Gerät zur Solarstromerzeugung aufweisen.

Es kann eine Seilwinde aufweisen, mit der es auf einfache Weise z.B. an Land oder an ein anderes Boot gezogen werden kann.

Es kann mit Einrichtungen zum Aufbewahren von Kites usw. ausgestattet sein.

Es kann auch mit Halterungen zur Aufnahme der Bar, der Sicherheitseinrichtungen oder zum Abrollen der Leinen ausgestattet sein.

Die Erfindung betrifft ferner auch ein Verfahren zum Betrieb eines Übungsgerätes zur Anbringung an einer Verankerung zum Erlernen der Handhabung von Personen ziehenden Fluggeräten, welches eine Plattform zur stehenden, sitzenden, knienden oder liegenden Aufnahme mindestens einer Person, und mindestens einen Verankerungspunkt zur Befestigung eines die Person am Übungsgerät sichernden Sicherungsmittels, und eine vertikale, relativ zur Plattform ortsfeste oder in vorbestimmten Grenzen ortsvariable Drehachse, um welche das Übungsgerät drehbar gelagert ist, aufweist. Besonders bevorzugt ist dies demnach ein Übungsgerät der vorstehend beschriebenen Art.

Das Verfahren umfasst die Schritte
- (insbesondere rückseitiges) Sichern der Person am in oder oberhalb der Höhe ihres Gesäßbereichs liegenden Verankerungspunkt;
- unmittelbares oder indirektes Verbinden der Drehachse mit einer Verankerung, so dass das Übungsgerät ferner auch um diese Verankerung drehbar ist;
- Aufbringen von externen Kräften mittels des von der Person gehaltenen Fluggeräts auf das Übungsgerät;
- Drehen des Übungsgeräts um seine Drehachse sowie um die Verankerung aufgrund besagter externer Kräfte;
so dass sich das Übungsgerät selbsttätig derart ausrichtet, dass sich das Fluggerät auf der windabgewandten Seite befindet.

Anders ausgedrückt: Die übende Person wird zunächst am Übungsgerät gesichert, und zwar vorzugsweise im Bereich ihrer Rückseite. Der Verankerungspunkt, über welchem sie mit dem Übungsgerät verbunden ist, liegt mindestens in Gesäßhöhe, vorzugsweise höher. Der Schüler befindet sich typischerweise in einer stehenden oder sitzenden Position. Nun wird das Fluggerät vom Schüler, in der Anfangsphase aber auch vom Lehrer, in die Luft gebracht. Das Fluggerät wird vom Wind nach Lee gezogen; die Zugkräfte verlaufen vom Fluggerät, das insbesondere ein Kite ist, zum Schüler, und von ihm aus über das Sicherungsmittel und den Verankerungspunkt zum Körper des Übungsgeräts. Die typischerweise exzentrisch (also nicht durch den Massenmittelpunkt des Übungsgerätes) verlaufenden Zugkräfte führen zu einer Drehung des Übungsgerätes um eine ortsfeste oder in vorgegebenen Grenzen ortsvariable Drehachse, bis die Kräfte gerade durch den Massenmittelpunkt verlaufen. Dann erfolgt, sofern nicht gehemmt, nur noch eine lineare Fortbewegung des Übungsgerätes.

Wird die Drehachse durch ein relativ zur Plattform ortsfestes Drehgelenk bereitgestellt, und wird das Drehgelenk seinerseits unmittelbar oder indirekt mit einer Verankerung verbunden, so bewegt sich das Übungsgerät im Wesentlichen nicht linear fort, sondern dreht sich nur bis zur Herstellung des oben genannten, typischerweise temporären Kräftegleichgewichts. Lediglich ein geringfügiges "Driften" ist in dem Rahmen möglich, der durch das Spiel der Verankerung (z.B. Seil mit Anker) erlaubt ist. Ändern sich die Kräfte, beispielsweise durch Änderung der Windrichtung oder Umsteuern des Kites, erfolgt eine erneute Drehung des Übungsgerätes, und ggf. ein erneutes geringfügiges Driften. Der Schüler kann so auf einfache, kontrollierbare und sichere Weise den Umgang mit dem Kite und die Reaktionen seines "Boards", das durch die drehbare Plattform repräsentiert wird, erlernen. Aufgrund der Sicherung ermüdet er nicht so schnell, und die Sicherheit gegen unbeabsichtigtes Über-Bord-Gehen aufgrund plötzlicher starker Zugkräfte durch den Kite ist deutlich erhöht.

Es ist klar, dass das erfindungsgemäße Verfahren auch bei einer in vorbestimmten Grenzen ortsvariablen Drehachse einsetzbar ist. Das bedeutet, dass sich die Drehachse z.B. entlang zweier Punkte frei bewegen (z.B. gleiten) kann, wobei diese Punkte konstruktiv fest vorgegeben und die zugehörigen Endanschläge fest mit dem Übungsgerät verbunden sind. Somit ist die Drehachse weiterhin ortsfest im dem Sinne, dass die nicht vollkommen frei angeordnet sein kann, wobei der Bewegungsbereich durch am Übungsgerät befestigte Komponenten konstruktiv vorgegeben ist.

Nach einer bevorzugten Ausführungsform erfolgt die o.g. Verbindung des schwimmfähigen Übungsgeräts mit der Verankerung (nicht zu Verwechseln mit dem Verankerungspunkt) indirekt und wird mittels eines Seiles, eines Kabels oder einer Kette bereitgestellt. Anders ausgedrückt, das schwimmfähige Übungsgerät ist nicht unmittelbar (fest) mit der Verankerung verbunden, sondern indirekt (elastisch, biegeschlaff, in Grenzen veränderbar), mittels eines Seiles oder dergleichen.

Die Verankerung selber ist vorzugsweise ein Schwimmkörper (z.B. Boje), ein Tauchkörper (z.B. wassergefüllter, im Wasser schwebender Tank) oder ein fester Untergrund (z.B. Meeresgrund, Gewicht, Anker). Je nach Spannung der indirekten Verbindung kann das Übungsgerät dann nur eine kurze Strecke auf dem Wasser gleiten (driften), bevor es ausschließlich die oben beschriebene Drehbewegung ausführen kann.

Nach einer weiteren Ausführungsform wird das Übungsgerät mittels eines motorgetriebenen Fahrzeugs fortbewegt, während der Schüler mit dem Kite übt. Somit können auch reale Fahrsituationen mit dem Schüler simuliert werden. Dies hat weitere signifikante Vorteile in Bezug auf die Lerngeschwindigkeit, sowie die Sicherheit des Schülers und des Umfeldes. Zudem kann durch den entstehenden Fahrtwind auch bei extrem wenig Wind geschult werden, was die Wirtschaftlichkeit hinsichtlich der Benutzung des Übungsgerätes weiter verbessert.

Nach einer Ausführungsform ist das motorgetriebene Fahrzeug an der ortsfesten Drehachse mit dem Übungsgerät verbunden. Das bedeutet, dass sich das Übungsgerät während des Schleppens, durch das Wind für den Kite erzeugt wird, auch nach der oben beschriebenen Art um die Drehachse drehen kann.

Nach einer anderen Ausführungsform erfolgt das Schleppen mittels der o.g. Schleppeinrichtung; da diese an einer bestimmten Stelle im Randbereich der Plattform angebracht ist, ist eine freie Drehung der Plattform dann nicht (oder nur sehr eingeschränkt) möglich.

Der Betrieb des beschriebenen Übungsgerätes mittels des erfindungsgemäßen Verfahrens erlaubt es, Übungsstunden gefahrlos und abseits von stark frequentierten Zonen durchführen zu können. Eine Gefährdung der Kiteschüler, von Passanten und anderen Kitern wird minimiert. Lernerfolge sind bedeutend schneller und mit weniger Kraftaufwand zu erreichen. Der Schüler kann entspannter und mit weniger Stress und mehr Freude lernen. Zudem wird auch der Kitelehrer entlastet und kann effektiver und sicherer schulen. Ein Schulen bei jeder Windrichtung wird ermöglicht, so dass bedeutend mehr Schulungen stattfinden können.

### Figurenbeschreibung

- **Figur 1**: zeigt eine schematische Seitenansicht einer bevorzugten Ausführungsform des Übungsgerätes.
- **Figur 2**: zeigt schematisch eine Ausführungsform des Übungsgerätes mit innerhalb konstruktiv vorgegebener Grenzen ortsfester Drehachse.
- **Figur 3**: zeigt eine Draufsicht auf eine bevorzugte Ausführungsform des Übungsgerätes.
- **Figur 4**: zeigt eine schematische dreidimensionale Ansicht des Übungsgerätes.
- **Figur** 5: zeigt schematische die Situation bei exzentrisch an dem Übungsgerät angreifenden externen Kräften.
- **Figur 6**: zeigt schematisch die Situation nach Drehung der Plattform und mit durch den Massenmittelpunkt verlaufenden externen Kräften.

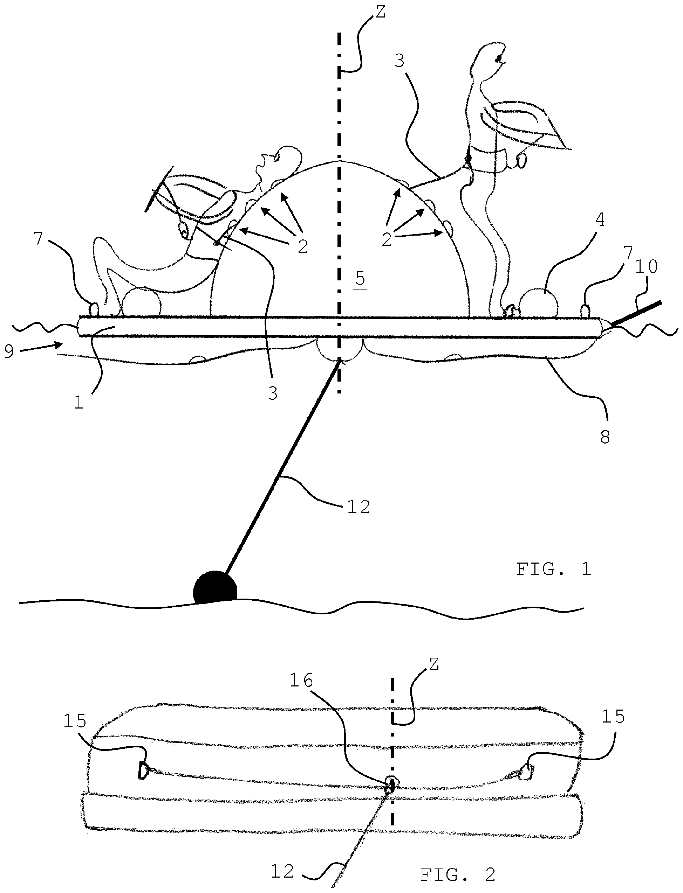

In der **Figur 1** ist eine schematische Seitenansicht einer bevorzugten Ausführungsform des Übungsgerätes dargestellt. Dieses umfasst eine Plattform 1. Auf dieser befinden sich vorliegend zwei Personen, von denen sich die eine in stehender, die andere in sitzender Position befindet. Die gezeigte Ausführungsform ist schwimmfähig und kann auf der Wasseroberfläche gleiten. Die Plattform 1 ist als Schwimmkörper ausgebildet, welcher dauerhaft einen Auftrieb bereitstellt.

Im Mittelbereich, vorliegend im Zentrum, der Plattform 1 ist ein Abstützkörper für den Rücken 5 angeordnet. An diesem sind mehrere Verankerungspunkte 2 zur Befestigung von die Personen am Übungsgerät sichernden Sicherungsmitteln 3 angebracht. Vorliegend sind die Verankerungspunkte 2 als Ösen ausgebildet, und die Sicherungsmittel 3 als Leinen. Die Verankerungspunkte 2 sind in oder oberhalb der Höhe des Gesäßbereiches der Person angeordnet. Dies hat den Vorteil, dass eine Person, die die Zugkräfte eines Kites auffangen muss, entlastet wird, da die Zugkräfte durch das hinter ihrem Rücken angeordnete Sicherungsmittel 3 abgeleitet werden, ohne dass die Person z.B. zu Boden gezogen werden würde, was dann der Fall wäre, wenn der Verankerungspunkt 2 auf dem Boden angeordnet wäre und/oder der Kite sehr flach über dem Wasser fliegen würde. Anders ausgedrückt, durch die erhöhte Anordnung des Verankerungspunkts 2 ist ein linear verlaufender Kraftfluss vom Fluggerät über dessen Leinen zum Gurtzeug des Schülers, und, unter Beibehaltung der linearen Richtung, weiter vom Schüler zum Körper des Übungsgerätes ermöglicht. Der Zugkraftvektor verläuft demnach in gerader Linie vom Fluggerät zum Körper des Übungsgerätes. Er tut dies unter Schneiden des Körpers des Schülers, wobei die Kräfte von geeigneten Hilfsmitteln (Gurtzeug, Haltegestell) um ihn herum geleitet werden, so dass der Schüler selber nicht die vollen Zugkräfte aufnehmen muss. Stemmt er sich gegen den Kite, so dass das Sicherungsmittel 3 vorübergehend außer Spannung ist, kann er den Kite vollständig selber übernehmen. Bei überraschenden Böen oder Ermüdung kann er die Kräfte anstatt über seinen eigenen Körper durch das Sicherungsmittel 3 auf den Körper des Übungsgerätes ableiten.

Die Plattform 1 umfasst außerdem einen Abstützkörper für die Füße 4, welches im Randbereich der Plattform 1 umlaufend angeordnet ist. An diesem Abstützkörper 4 kann sich eine Person, welche einen Kite (nicht gezeigt) steuert und dessen Zugkräfte aufzunehmen sucht, abstützen. Ferner umfasst die Plattform 1 auch Haltemittel 7 für die Füße.

Dargestellt ist außerdem die vertikale Drehachse Z, um welche das Übungsgerät drehbar gelagert ist. Das Übungsgerät kann, da es nicht in allen Freiheitsgraden fest mit einem Untergrund verbunden ist, mittels externer Kräfte in Drehung versetzt werden. Insbesondere kann es sich durch die von einem Kite bereitgestellten Zugkräfte, die mittels der Leinen zum Schüler, und von diesem aus über das Sicherungsmittel 3 und den Verankerungspunkt 2 an den Körper des Übungsgerätes weitergeleitet werden, drehen. Die gezeigte Ausführungsform hat eine vollständig ortsfeste Drehachse Z. Diese ist durch die Lage eines Drehgelenks vorgegeben, welches sich an der Unterseite der Plattform 1 in deren Zentrum befindet. An diesem ist ein Seil 12 befestigt, welches mit dem Untergrund in Verbindung steht, und vorliegend ein beschwertes Ende hat. Es ist klar, dass, je nach Spannung des Seils 12, das Übungsgerät horizontal zur Wasseroberfläche driften kann; ein sehr straff gespanntes Seil oder eine senkrechte Stange erlaubt praktisch kein Driften. Aus Sicht der Schüler auf der Plattform macht sich dieses Driften jedoch im Vergleich zu den um die vertikale Drehachse Z möglichen Drehungen kaum bemerkbar.

Das Übungsgerät weist dann, wenn es nicht mit dem Untergrund verbunden ist, eine vollständig ortsveränderliche Drehachse auf. Das Driften erlaubt dann ein gleichzeitiges Drehen, der Drehpunkt selber ist jedoch nicht mehr festgelegt.

Auch, wenn das Übungsgerät z.B. mittels eines Bootes an o.g. Seil 12 gezogen wird (z.B. zum Erzeugen von "künstlichem" Wind), kann es - neben dem vom Boot der Plattform aufgeprägten Driftbewegung - sich weiterhin um die definierte Drehachse Z drehen; diese ist weiterhin vollständig ortsfest. Es ist klar, dass dafür Sorge getragen werden muss, dass eine freie Drehung nicht durch aneinander stoßende Komponenten behindert wird.

An ihrer Unterseite weist die Plattform 1 einen mit ihr verbundenen, mit Wasser füllbaren Bremskörper 8 auf. Vorliegend ist dieser aus einem biegeschlaffen, planenartigen Material hergestellt, so dass ein flaches, aufblähbares Volumen bereitgestellt wird. Der Bremskörper 8 bildet einen zusätzlichen Unterboden unterhalb der Plattform 1. Er weist eine Öffnung 9 auf, durch welche er befüllbar und entleerbar ist. In der gezeigten Situation ist er weitgehend gefüllt, so dass er signifikant zur Kentersicherheit des Übungsgerätes beiträgt. Aufgrund der flachen Bauform des Bremskörpers 8 behindert dieser auch im befüllten Zustand die Drehung des Übungsgerätes nicht oder nur sehr wenig.

Wird das Übungsgerät nun im Bild nach rechts gezogen, beispielsweise mittels einer Schleppeinrichtung 10 (rechts im Bild; nur schematisch und zum Teil gezeigt), wird sich die Plattform 1 auf der Seite der Schleppeinrichtung 10 leicht anheben. Oberflächenwasser strömt unter die Plattform 1 und somit unter den Bremskörper 8. Das in dessen Volumen enthaltene Wasser wird dadurch durch die Öffnung 9 herausgedrückt; die Plattform wird leichter und besser manövrierfähig. Steht das Übungsgerät, füllt sich das Volumen wieder selbsttätig mit Wasser.

Damit der beschriebene Effekt des Entleerens erzielt wird, gereift die Schleppeinrichtung 10, in einer zur Drehachse Z parallelen Ansicht gesehen, am gegenüber der Öffnung 9 des Bremskörpers 8 liegenden Bereich des Übungsgerätes an.

Die **Figur 2** zeigt schematisch eine Ausführungsform des Übungsgerätes mit innerhalb konstruktiv vorgegebener Grenzen ortsfester Drehachse Z. Vorliegend ist diese durch ein gleitend zwischen zwei Endanschlägen 15 (Ösen) verschiebbares Koppelelement 16 (Rolle) bereitgestellt, welches auf einem Seil gleiten kann.

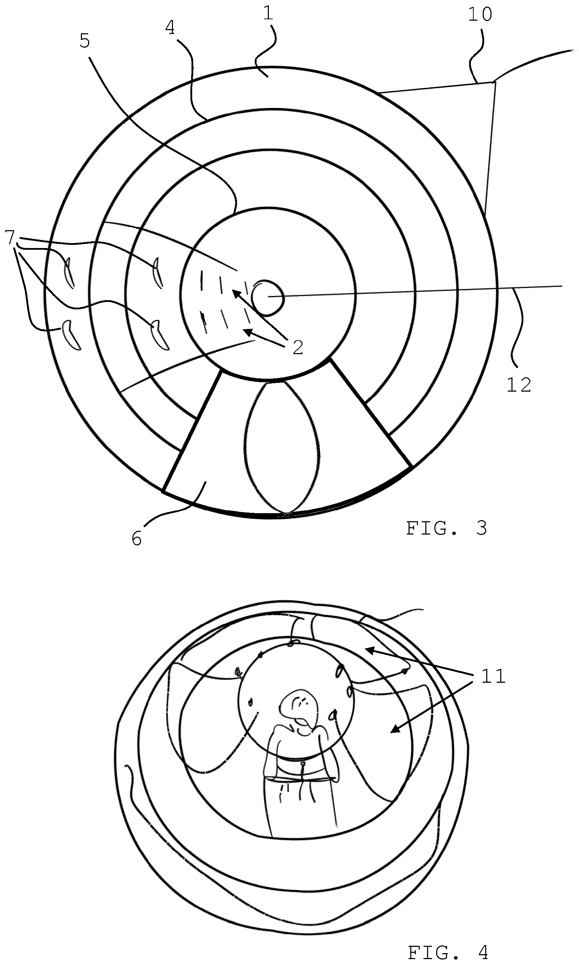

In **Figur 3** ist eine Draufsicht auf eine bevorzugte Ausführungsform des Übungsgerätes gezeigt. Gut erkennbar ist, dass dasselbe eine kreisförmige Grundfläche aufweist. Auch der zentral angeordnete Abstützkörper für den Rücken 5 ist rund. Die Personen wurden in der Figur aus Gründen der Übersichtlichkeit weggelassen. Erkennbar ist der (nahezu) umlaufende Abstützkörper für die Füße 4, sowie (für nur einen Schüler dargestellte) Verankerungspunkte 2 und Haltemittel 7 für die Füße. Das gezeigte "Übungs-Segment" kann einfach oder mehrfach auf der Plattform 1 vorhanden sein.

In der gezeigten Ausführungsform ist außerdem eine Aussparung 6 auf der Plattform 1 vorhanden. Die Aussparung 6 dient der Aufnahme eines als fest ausgebildeter Abstützkörper für die Füße 4 dienenden brettartigen Sportgeräts (ohne Bezugszeichen, nicht maßstäblich). Dieses ist kipp- und drehbar gelagert (Lagerungen nicht gezeigt), damit ein Schüler auf dem Gerät entsprechende Bewegungen vollführen kann, und zwar insbesondere dann, wenn er gleichzeitig ein Kite steuert. Die Aussparung kann aber auch für einen weiter unten dargestellten Übungssitz vorgesehen sein.

Die **Figur 4** zeigt verkleinert eine schematische dreidimensionale Ansicht eines Übungsgerätes von schräg oben. Bereits eingeführte Bezugszeichen sind aus Gründen der Übersichtlichkeit weggelassen. Auf diesem Übungsgerät ist eine Person angedeutet, die eine Bar (ohne Bezugszeichen) hält. Von der Bar aus erstrecken sich zwei Leinen (ohne Bezugszeichen) zu einem Kite (nicht gezeigt). Über die Leinen wird eine Zugkraft auf den Schüler ausgeübt; mittels des (nicht sichtbaren) Sicherungsmittels 3 und dem Verankerungspunkt 2 können die Kräfte auf den Körper des Übungsgerätes abgeleitet werden.

Erkennbar sind ferner transparent dargestellte Sitze 11, welche zwischen dem Abstützkörper für die Füße und dem Abstützkörper für den Rücken gespannt sind. Auf die obenstehenden Ausführungen hinsichtlich der Vorteile solcher Sitze wird verwiesen.

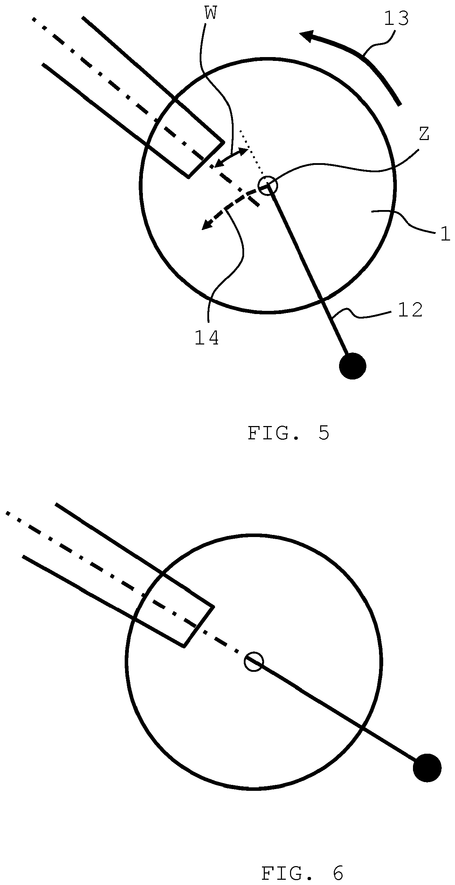

Die **Figur 5** zeigt die schematische Draufsicht auf das Übungsgerät, wenn vom Kite stammende Zugkräfte auf dasselbe wirken, die nicht (in einer Draufsicht gesehen) durch seinen Massenmittepunkt gehen. Die Plattform 1 ist mittels eines Seiles 12 am Untergrund befestigt, mithin ist die Drehachse Z relativ zur Plattform 1 ortsfest.

Im Bild nach links oben weisen die Leinen des Kites (nicht dargestellt), die strichpunktierte Linie deutet den (summierten) Zugkraft-Vektor der externen Kräfte an. Diese verläuft zunächst nicht durch den Massenmittelpunkt / die Drehachse Z. Daher versetzt sich das Übungsgerät in eine Drehbewegung (Pfeil 13 oben rechts). Das Zentrum des Übungsgerätes driftet zudem in Richtung des gestrichelten Pfeiles 14; dieser liegt auf einer Kreisbahn mit dem Mittelpunkt am Ende des Seils 12 (schwarzer Kreis; z.B. Anker oder Gewicht) . Die auf dem Bild senkrecht stehende Ebene des Kraftvektors und des Seiles 12 decken sich nicht, sondern stehen in einem Winkel W zueinander.

In **Figur 6**, in welcher die Bezugszeichen weggelassen wurden, ist die Drehung der Plattform 1 zum Stillstand gekommen, da der Kraftvektor nunmehr durch die Drehachse Z verläuft. Er liegt zudem in derselben Ebene wie das Seil 12, welches die über Schüler, Sicherungsmittel und Verankerungspunkt (jeweils nicht gezeigt) in den Körper des Übungsgerätes, und von dort aus über das Drehgelenk zu ihm verlaufenden Kräfte weiterleitet und zum Untergrund führt. Durch Steuern des Kites an eine andere Stelle wird das gezeigte Gleichgewicht gestört; durch ein erneutes Drehen und ggf. Driften des Übungsgerätes wird das Gleichgewicht wieder hergestellt.

### Bezugszeichenliste

- 1: Plattform
- 2: Verankerungspunkt
- 3: Sicherungsmittel
- 4: Abstützkörper für die Füße
- 5: Abstützkörper für den Rücken
- 6: Aussparung
- 7: Haltemittel
- 8: Bremskörper
- 9: Öffnung
- 10: Schleppeinrichtung
- 11: Sitze
- 12: Seil
- 13: Pfeil
- 14: Pfeil
- 15: Endanschlag
- 16: Koppelelement

- X: lokale Drehachse
- W: Winkel

## Patentansprüche

1. Übungsgerät zur Anbringung an einer Verankerung zum Erlernen der Handhabung von Personen ziehenden Fluggeräten, umfassend
- eine Plattform (1) zur stehenden, sitzenden, knienden oder liegenden Aufnahme mindestens einer Person;
- mindestens einen Verankerungspunkt (2) zur Befestigung eines die Person am Übungsgerät sichernden Sicherungsmittels (3);
- eine vertikale Drehachse (Z), um welche das Übungsgerät drehbar lagerbar oder drehbar gelagert ist;
wobei der Verankerungspunkt (2) in oder oberhalb der Höhe des Gesäßbereiches der Person angeordnet, und das Übungsgerät mittels an der Plattform (1) angreifender Kräfte um diese Drehachse (Z) drehbar ist, **dadurch gekennzeichnet, dass** die Drehachse (Z) relativ zur Plattform (1) mittels eines an der Unterseite, am Umfang, oder der Oberseite der Plattform (1) angeordneten Drehgelenks vollständig, oder durch ein gleitend zwischen zwei Endanschlägen (15) verschiebbares Koppelelement (16) innerhalb konstruktiv vorgegebener Grenzen, ortsfest ist, und wobei das Drehgelenk seinerseits unmittelbar oder indirekt mit einer Verankerung verbunden ist, so dass das Übungsgerät ferner auch um diese Verankerung drehbar ist, und wobei das Übungsgerät ferner schwimmfähig ist, oder Kufen oder eine gleitfähige Unterseite, oder Rollen aufweist.

2. Übungsgerät nach Anspruch 1, wobei dasselbe schwimmfähig ist und einen Schwimmkörper umfasst, welcher dauerhaft oder vorübergehend einen Auftrieb bereitstellt.

3. Übungsgerät nach einem der vorhergehenden Ansprüche, wobei dasselbe einen Abstützkörper für die Füße (4), und/oder einen Abstützkörper für den Rücken (5) einer Person aufweist, und wobei der oder die Abstützkörper (4, 5) am Rand der Plattform (1) oder im Mittelbereich der Plattform (1) angeordnet ist oder sind.

4. Übungsgerät nach Anspruch 3, wobei der Abstützkörper für die Füße (4) einen Bereich aufweist, welcher mittels der Füße einer Person seitlich und/oder vor- und rückwärts kippbar und/oder um eine Mittelachse drehbar ist, und wobei dieser Abstützkörper (4) entweder mit den Füßen verformbar ausgebildet, oder fest ausgebildet und den besagten Freiheitsgraden entsprechend bewegbar auf der Plattform (1) gelagert ist.

5. Übungsgerät nach Anspruch 4, wobei die Plattform (1) eine Aussparung (6) am Umfang aufweist, wobei die Aussparung (6)
- zur Aufnahme eines als fest ausgebildeter Abstützkörper für die Füße (4) dienenden brettartigen Sportgeräts vorgesehen ist, wobei das Sportgerät den besagten Freiheitsgraden entsprechend in der Aussparung (6) lagerbar ist, oder
- einen verformbaren Boden aufweist und zur Befestigung an den Füßen einer Person dienende Haltemittel (7) bereitstellt, oder
- zur Aufnahme eines eine Person aufnehmenden, separaten Übungssitzes geeignet ist.

6. Übungsgerät nach einem der Ansprüche 1 bis 4 mit einem Schwimmkörper, wobei dasselbe unterhalb oder seitlich der Plattform (1) mindestens einen mit ihr verbundenen, mit Wasser oder einem Feststoff füllbaren oder gefüllten Bremskörper (8) aufweist.

7. Übungsgerät nach einem der vorhergehenden Ansprüche, ferner umfassend eine Schleppeinrichtung (10).

8. Übungsgerät nach Anspruch 3, wobei zwischen dem Abstützkörper für die Füße (4) und dem Abstützkörper für den Rücken (5) Sitze (11) gespannt sind.

9. Übungsgerät nach einem der vorhergehenden Ansprüche, ferner umfassend einen motorischen Antrieb und/oder eine Aufnahme für ein zum schiebenden und/oder ziehenden Vortrieb des Übungsgerätes geeignetes Fahrzeug.

10. Verfahren zum Betrieb eines Übungsgerätes zur Anbringung an einer Verankerung zum Erlernen der Handhabung von Personen ziehenden Fluggeräten, welches eine Plattform (1) zur stehenden, sitzenden, knienden oder liegenden Aufnahme mindestens einer Person, und mindestens einen Verankerungspunkt (2) zur Befestigung eines die Person am Übungsgerät sichernden Sicherungsmittels (3), und eine vertikale, relativ zur Plattform (1) ortsfeste oder in vorbestimmten Grenzen ortsvariable Drehachse (Z), um welche das Übungsgerät drehbar gelagert ist, aufweist, umfassend die Schritte:
- Sichern der Person am in oder oberhalb der Höhe ihres Gesäßbereichs liegenden Verankerungspunkt (2);
- unmittelbares oder indirektes Verbinden der Drehachse (Z) mit einer Verankerung, so dass das Übungsgerät ferner auch um diese Verankerung drehbar ist;
- Aufbringen von externen Kräften mittels des von der Person gehaltenen Fluggeräts auf das Übungsgerät;
- Drehen des Übungsgeräts um seine Drehachse (Z) sowie um die Verankerung aufgrund besagter externer Kräfte;
so dass sich das Übungsgerät selbsttätig derart ausrichtet, dass sich das Fluggerät auf der windabgewandten Seite befindet.

11. Verfahren nach Anspruch 10, wobei die Drehachse (Z) durch ein Drehgelenk bereitgestellt wird.

12. Verfahren nach Anspruch 11, wobei das Übungsgerät schwimmfähig und die Verbindung indirekt ist und mittels eines Seiles, eines Kabels oder einer Kette bereitgestellt wird, und wobei die Verankerung ein Schwimmkörper, ein Tauchkörper oder ein fester Untergrund ist.

13. Verfahren nach einem der Ansprüche 10 oder 11, wobei das Übungsgerät mittels eines motorgetriebenen Fahrzeugs fortbewegt wird.

14. Verfahren nach Anspruch 13, wobei das motorgetriebene Fahrzeug an der ortsfesten Drehachse (Z) mit dem Übungsgerät verbunden ist, so dass Wind für das Fluggerät erzeugt wird, während sich das Übungsgerät um die Drehachse (Z) drehen kann.

## Claims

1. Training device for attachment to an anchoring for learning the operation of flying apparatuses pulling persons, comprising
- a platform (1) for the standing, sitting, kneeing or lying reception of at least one person;
- at least one anchoring point (2) for the fastening of a securing means (3) which secures the person to the training device;
- a vertical rotary axis (Z), about which the training device can be mounted rotatably or is mounted rotatably;
wherein the anchoring point (2) is arranged in or above the height of the person's buttocks region, and the training device is rotatable around this rotary axis (Z) by means of forces acting on the platform (1), **characterized in that** the rotary axis (Z) is, by means of a rotary joint which is located at the underside, at the circumference, or at the upper side of the platform (1), completely, or within constructively predefined limits, by means of a coupling element (16) which is slidably moveable between two end stops (15), stationary relatively to the platform (1), and wherein the rotary joint itself is directly or indirectly connected with an anchoring such that the training device is further rotatable around said anchoring, and wherein further, the training device is floatable, or has skids, or a slidably underside, or rollers.

2. Training device according to claim 1, wherein the same is floatable and comprises a floating body which provides a permanent or temporary buoyancy.

3. Training device according to any of the preceding claims, wherein the same has a support body for the feet (4), and/or a support body for the back (5) of a person, and wherein the support body / bodies (4, 5) is or are located at the edge of the platform (1) or at the central region of the platform (1).

4. Training device according to claim 3, wherein the support body for the feet (4) has a region which can, by means of the feet of a person, be tilted laterally or forward/backward, and/or be rotated around a central axis, and wherein the support body (4) is designed either as a body which is deformable by the feet, or as a rigid body which is supported moveable on the platform (1) according to said degrees of freedom.

5. Training device according to claim 4, wherein the platform (1) comprises a recess (6) at its circumference, wherein the recess (6)
- is provided for the reception of a board like sports device serving as a support body for the feet (4), wherein the sports device can be supported in the recess (6) according to said degrees of freedom, or
- has a deformable floor and provides holding means (7) for a fixation to a person's feet,
- is suitable for the reception of a separate training seat which receives a person.

6. Training device according to any of claims 1 to 4 with a floating body, wherein the same has at least one braking body (8) which is located below or laterally to the platform (1) and which is attached to the same, and which is or can be filled with water or a solid material.

7. Training device according to any of the preceding claims, further comprising a dragging device (10).

8. Training device according claim 3, wherein seats are stretched between the support body for the feet (4) and the support body for the back (5).

9. Training device according to any of the preceding claims, further comprising a motoric drive and/or a mounting for a vehicle suitable for the pushing and/or pulling propulsion of the training device.

10. Method for the operation of a training device for attachment to an anchoring for learning the operation of flying apparatuses pulling persons, the training device having a platform (1) for the standing, sitting, kneeing or lying reception of at least one person; and at least one anchoring point (2) for the fastening of a securing means (3) which secures the person to the training device; and a vertical rotary axis (Z), about which the training device is rotationally supported, the rotary axis (Z) being, relatively to the platform (1), immovable, or movable within constructively predetermined limits; the method comprising the steps:
- securing the person at the anchoring point (2) lying in or above the height of the person's buttocks region;
- direct or indirectly connecting the rotary axis (Z) with an anchoring, such that the training device is further rotatable around this anchoring as well;
- exerting external forces on the training device by means of the flying apparatus held by the person;
- rotating the training device around its rotary axis (Z) as well as around the anchoring due to said external forces;
such that the training device automatically orients itself in such a way that the flying apparatus is located on the downwind side.

11. Method according to claim 10, wherein the rotary axis (Z) is provided by a rotary joint.

12. Method according to claim 11, wherein the training device is floatable and wherein the connection is indirect, and is provided by means of a rope, a cable, or a chain, and wherein the anchoring is a floating body, an immersion body, or a solid underground.

13. Method according to any of claims 10 or 11, wherein the training device is moved by means of a motor driven vehicle.

14. Method according to claim 13, wherein the motor driven vehicle is attached at the stationary rotary axis (Z) to the training device, so that wind for the flying apparatus is generated, while the training device can rotate around its rotary axis (Z).

## Revendications

1. Appareil d'exercice destiné à être monté sur un ancrage pour l'apprentissage du maniement d'engins volants tirant des personnes, comprenant
- une plateforme (1) pour la réception debout, assise, à genoux ou couchée d'au moins une personne ;
- au moins un point d'ancrage (2) destiné à fixer un moyen d'attache (3) attachant la personne à l'appareil d'exercice ;
- un axe de rotation vertical (Z), l'appareil d'exercice étant monté ou pouvant être monté en rotation autour de celui-ci ;
dans lequel le point d'ancrage (2) est disposé dans ou au-dessus de la hauteur de la zone du postérieur de la personne, et l'appareil d'exercice peut tourner autour de cet axe de rotation (Z) au moyen de forces s'exerçant sur la plateforme (1), **caractérisé en ce que** l'axe de rotation (Z) est totalement immobile par rapport à la plateforme (1) au moyen d'un pivot disposé sur la face inférieure, sur le pourtour, ou sur la face supérieure de la plateforme (1) ou est immobile dans des limites pouvant être prédéfinies par construction par le biais d'un élément de couplage (16) déplaçable par coulissement entre deux butées finales (15), et dans lequel le pivot est relié de son côté directement ou indirectement à un ancrage, de sorte que l'appareil d'exercice peut également tourner autour de cet ancrage, et dans lequel l'appareil d'exercice est en outre flottant ou comporte des patins ou une face inférieure glissante ou des roulettes.

2. Appareil d'exercice selon la revendication 1, dans lequel le même est flottant et comprend un flotteur, lequel fournit une flottabilité permanente ou temporaire.

3. Appareil d'exercice selon l'une des revendications précédentes, dans lequel le même comporte un corps d'appui pour les pieds (4), et/ou un corps d'appui pour le dos (5) d'une personne, et dans lequel le ou les corps d'appui (4, 5) est disposé ou sont disposés au bord de la plateforme (1) ou dans la zone du milieu de la plateforme (1).

4. Appareil d'exercice selon la revendication 3, dans lequel le corps d'appui pour les pieds (4) comporte une zone, laquelle peut, au moyen des pieds d'une personne, basculer latéralement et/ou vers l'avant et l'arrière et/ou tourner autour d'un axe médian, et dans lequel ce corps d'appui (4) est réalisé ou bien comme déformable avec les pieds ou bien est rigide et est monté sur la plateforme (1) de manière mobile correspondant àudits degrés de liberté.

5. Appareil d'exercice selon la revendication 4, dans lequel la plateforme (1) comporte un évidement (6) sur le pourtour, dans lequel l'évidement (6)
- est prévu pour recevoir un appareil de sport de type planche servant de corps d'appui rigide pour les pieds (4), dans lequel l'appareil de sport peut être monté dans l'évidement (6) de manière correspondante à ces degrés de liberté, ou
- comporte un sol déformable et fournit des moyens de maintien (7) destinés à être fixés aux pieds d'une personne, ou
- est apte à la réception d'un siège d'exercice séparé recevant une personne.

6. Appareil d'exercice selon l'une des revendications 1 à 4 avec un flotteur, dans lequel celui-ce comporte en dessous ou à côté de la plateforme (1) au moins un corps de frein (8) relié à celle-ci, rempli ou pouvant être rempli d'eau ou avec un solide.

7. Appareil d'exercice selon l'une des revendications précédentes, comprenant en outre un dispositif de remorquage (10).

8. Appareil d'exercice selon la revendication 3, dans lequel des assises (11) sont tendues entre le corps d'appui pour les pieds (4) et le corps d'appui pour le dos (5).

9. Appareil d'exercice selon l'une des revendications précédentes, comprenant en outre un entraînement motorisé et/ou une réception pour un véhicule adapté à la propulsion et/ou à la traction de l'appareil d'exercice.

10. Procédé de fonctionnement d'un appareil d'exercice destiné à être monté sur un ancrage pour l'apprentissage du maniement d'engins volants tirant des personnes, lequel comporte une plateforme (1) pour la réception debout, assise, à genoux ou couchée d'au moins une personne, au moins un point d'ancrage (2) destiné à fixer un moyen d'attache (3) attachant la personne à l'appareil d'exercice, et un axe de rotation (Z) verticale immobile par rapport à la plateforme (1) ou mobile dans des limites prédéterminées, l'appareil d'exercice étant monté en rotation autour de celui-ci, comprenant les étapes de :
- attache de la personne au point d'ancrage (2) situé à la hauteur de sa zone d'assise ou au-dessus de celle-ci ;
- liaison directe ou indirecte de l'axe de rotation (Z) à un ancrage, de sorte que l'appareil d'exercice peut également tourner autour de cet ancrage ;
- application de forces externes sur l'appareil d'exercice au moyen de l'engin volant maintenu par la personne ;
- rotation de l'appareil d'exercice autour de son axe de rotation ainsi qu'autour de l'ancrage en raison de ces forces externes ;
de sorte que l'appareil d'exercice s'oriente de lui-même de façon à ce que l'engin volant se trouve du côté sous le vent.

11. Procédé selon la revendication 10, dans lequel l'axe de rotation (Z) est fourni par un pivot.

12. Procédé selon la revendication 11, dans lequel l'appareil d'exercice est flottant et la liaison est indirecte et est fournie au moyen d'une corde, d'un câble ou d'une chaîne, et dans lequel l'ancrage est un flotteur, un corps immergé ou une fondation solide.

13. Procédé selon l'une des revendications 10 ou 11, dans lequel l'appareil d'exercice est déplacé au moyen d'un véhicule motorisé.

14. Procédé selon la revendication 13, dans lequel le véhicule motorisé est relié avec l'appareil d'exercice à l'axe de rotation stationnaire (Z), de sorte qu'un vent est généré pour l'engin volant alors que l'appareil d'exercice peut tourner autour de l'axe de rotation (Z).
